# EUROPÄISCHE PATENTSCHRIFT

(11) **EP 0 425 846 B1**
(45) Veröffentlichungstag und Bekanntmachung des Hinweises auf die Patenterteilung: **19.01.1994**
(21) Anmeldenummer: 90119276.5
(22) Anmeldetag: 08.10.1990
(51) Int. Cl.: H01R 35/02

(54) **Vorrichtung zur Stromübertragung zwischen zwei Endstellen**
Current supply device between two terminals
Dispositif d'alimentation de courant entre deux postes terminaux

(30) Priorität: 25.10.1989 DE 3935529
(43) Veröffentlichungstag der Anmeldung: 08.05.1991
(73) Patentinhaber: kabelmetal electro GmbH, 30002 Hannover (DE)
(72) Erfinder: Schauer, Friedrich, W-8501 Heroldsberg (DE); Berthold, Hans, W-8501 Eckental (DE); Wolff, Manfred, W-8501 Schwarzenbruck (DE); Wölfel, Kurt, W-8500 Nürnberg (DE)

(56) Entgegenhaltungen:
- EP-A- 0 192 798
- DE-A- 3 641 706

## Beschreibung

Die Erfindung betrifft gemäß Oberbegriff von Patentanspruch 1 eine Vorrichtung zur Stromübertragung zwischen zwei Endstellen, zwischen denen eine der elektrischen Verbindung dienende, in Windungen verlaufende Flachband-Leitung mit mindestens zwei elektrischen Leitern angeordnet ist, deren Länge wesentlich größer als der Abstand der beiden Endstellen voneinander ist, bei welcher mindestens eine der beiden Endstellen relativ zu der anderen bewegbar ist, bei welcher an die abisolierten Leiter der Flachband-Leitung jeweils Leiter einer weiterführenden Leitung elektrisch leitend angeschlossen sind und bei welcher die Enden der Flachband-Leitung und die Verbindungsstelle der Leiter der beiden Leitungen jeweils von einem Schutzkörper aus Isoliermaterial umgeben sind (DE-A- 36 41 706).

Geräte mit derartigen Vorrichtungen sind beispielsweise Aufroller, in denen eine elektrische Leitung auf einer Spule aufgewickelt ist. Die Leitung kann aus dem Gehäuse des Gerätes herausgezogen und unter der Wirkung einer Feder nach Fortfall der Zugkraft automatisch wieder aufgerollt werden. Bei dem Gerät kann es sich auch um die Stromzuführung für einen Prallschutz für Kraftfahrzeuge handeln, bei dem eine elektrische Leitung im Lenkrad eines Kraftfahrzeugs untergebracht ist. Ein wesentliches Problem bei diesen Geräten ist die Stromübertragung zwischen feststehenden und beweglichen Teilen. Dieses Problem tritt bei allen Geräten auf, bei denen zwei relativ zueinander bewegbare Endstellen vorhanden sind, von denen in den meisten Fällen eine als Festpunkt ausgebildet ist. Die für solche Fälle seit langem bekannten Schleifkontakte bzw. Schleifringe sind einem Verschleiß unterworfen und insbesondere bei niedrigen Stromstärken wegen der schwankenden Übergangswiderstände nachteilig.

Bei der eingangs erwähnten, bekannten Vorrichtung nach der DE- A-36 41 706 erfolgt die Stromübertragung durch die nach Art eines Federhauses gewickelte Flachband-Leitung. Bei einer relativen Drehbewegung der beiden durch die Flachband-Leitung verbundenen Endstellen "atmet" die aufgewickelte Flachband-Leitung wie die Feder einer Uhr. Die Windungen werden in der einen Drehrichtung auf einen kleinen Durchmesser zusammengezogen. Sie gehen in der anderen Drehrichtung wieder auf einen größeren Durchmesser auf. Die gefalteten Enden der Flachband-Leitung sind von einem Schutzkörper umgeben. Das Ende der weiterführenden Leitung und die Verbindungsstelle zwischen den Leitern beider Leitungen sind von einer Abdeckung umgeben, die teilweise vom Schutzkörper umschlossen ist. Dadurch ist zwar ein wirksamer Schutz gegen Beschädigungen gegeben. Es kann aber nicht ausgeschlossen werden, daß die Verbindungsstelle der Leiter durch Zug- und Biegebeanspruchungen beschädigt wird, die auf die weiterführende Leitung einwirken.

Der Erfindung liegt die Aufgabe zugrunde, eine Vorrichtung mit einer in Windungen verlaufenden Flachband-Leitung anzugeben, an deren Leiter die Leiter einer weiterführenden Leitung so angeschlossen sind, daß die Verbindungsstelle zwischen den Leitern beider Leitungen wirksam gegen Zug- und Biegebeanspruchungen geschützt ist.

Diese Aufgabe wird bei einer Vorrichtung der eingangs geschilderten Art gemäß der Erfindung dadurch gelöst,
- daß die abisolierten blanken Leiter der weiterführenden Leitung jeweils in einem aus Isoliermaterial bestehenden Klemmkörper festgelegt sind, der zwischen der Verbindungsstelle der Leiter beider Leitungen und der verbleibenden Isolierung der weiterführenden Leitung angeordnet ist und in dem die Leiter mindestens zweimal gebogen festgelegt sind und
- daß der Klemmkörper in den Schutzkörper gegen axiale Bewegung gesichert eingebettet ist.

In dem Klemmkörper sind die Leiter der weiterführenden Leitung in abgebogener Form festgelegt, so daß sie aus demselben nicht herausgezogen werden können. Der Klemmkörper seinerseits ist in axialer Richtung gesichert im Schutzkörper angeordnet. Auf die weiterführende Leitung ausgeübte Zugbeanspruchungen werden daher ebenso wie Biegebeanspruchungen vom Klemmkörper abgefangen. Sie können sich nicht auf die aus dem Klemmkörper herausragenden freien Enden der Leiter und damit auch nicht auf die Verbindungsstelle der Leiter beider Leitungen auswirken. Diese ist vielmehr wirksam gegen Zug- und Biegebeanspruchungen geschützt.

Vorteilhafte Ausgestaltungen der Erfindung gehen aus den Unteransprüchen hervor.

Ein Ausführungsbeispiel des Erfindungsgegenstandes ist in den Zeichnungen dargestellt.

Es zeigen:

Fig. 1 und 2 schematisch Querschnitte durch zwei unterschiedliche Geräte mit einer Vorrichtung nach der Erfindung.

Fig. 3 eine Flachband-Leitung mit zwei gefalteten Enden in vergrößerter Darstellung.

Fig. 4 einen Schnitt durch Fig. 3 entlang der Linie IV - IV in nochmals vergrößerter Darstellung.

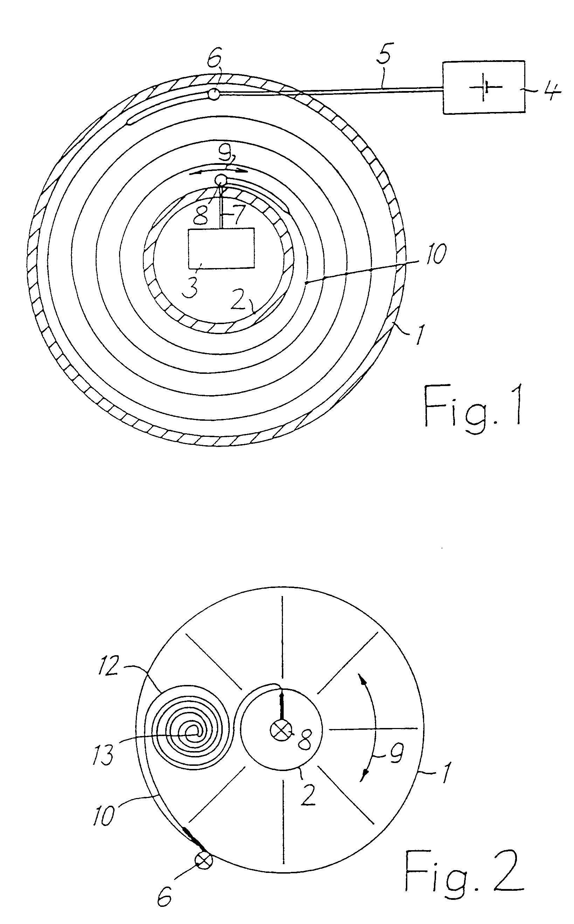

In Fig. 1 sind schematisch zwei beispielsweise kreisförmig ausgebildete Wände 1 und 2 des Gehäuses eines elektrischen Geräts dargestellt. Dieses Gerät kann beispielsweise ein in das Lenkrad eines Kraftfahrzeugs eingebautes Steuergerät sein. Zur Stromversorgung einer Elektronik 3 dieses Geräts ist dasselbe an die Batterie 4 des Kraftfahrzeugs angeschlossen. Die Batterie 4 ist über eine elektrische Leitung 5 mit einer als Festpunkt ausgeführten Endstelle 6 verbunden. Die Elektronik 3 ist über eine elektrische Leitung 7 an eine Endstelle 8 angeschlossen, die in Richtung des Doppelpfeiles 9 bewegbar ist. Zwischen den beiden Endstellen 6 und 8 ist eine Flachband-Leitung 10 angebracht, die im folgenden der Einfachheit halber als "FBL 10" bezeichnet wird. Die FBL 10 ist im dargestellten Ausführungsbeispiel mit zwei Leitern 11 versehen. Sie kann aber auch mehr als zwei Leiter aufweisen, die auch unterschiedliche Querschnitte haben können.

Die FBL 10 kann gemäß Fig. 1 zwischen den beiden Endstellen 6 und 8 in mehreren Windungen, also nach Art eines Federhauses von Uhren, angeordnet sein. Obwohl die Anzahl der Umdrehungen eines Lenkrades auf etwa sechs Umdrehungen begrenzt ist, sollen wesentlich mehr als sechs Windungen für die FBL 10 vorgesehen sein. Die Drehbewegung der Endstelle 8 macht sich dann für eine einzelne Windung der FBL 10 nicht wesentlich bemerkbar. Es wird lediglich der Durchmesser des aus allen Windungen der FBL 10 bestehenden Wickels verkleinert bzw. vergrößert.

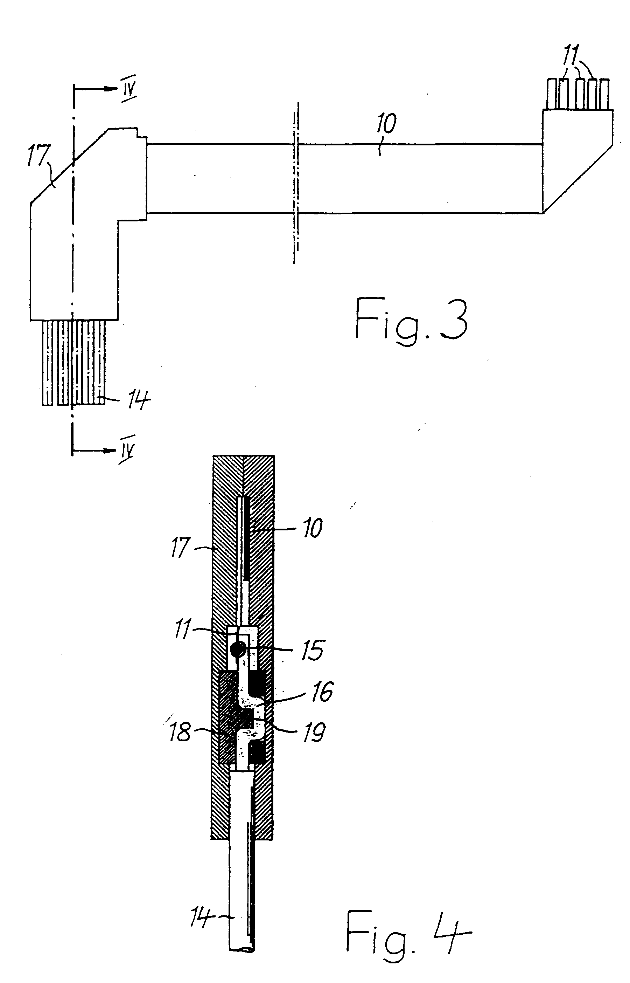

Die FBL 10 ist vorzugsweise mit flachen Leitern 11 ausgerüstet, so daß sich eine sogenannte Flachleiter-Bandleitung ergibt. Diese Ausführungsform ist wegen der Leiterform besonders dünn und nimmt daher sehr wenig Raum ein. Grundsätzlich könnte die Leitung aber auch mit runden Leitern ausgeführt sein. Die Leitungsenden können durch Faltung der FBL 10 um 90° gegenüber der Flachband-Leitung selbst abgeknickt sein, so wie es in Fig. 3 dargestellt ist. Es ist dadurch jeweils eine Anschlußstelle gebildet, die rechtwinklig vom in Windungen verlaufenden Teil der FBL 10 absteht und an deren freien Enden die Leiter 11 zum Anschluß einer weiterführenden Leitung zur Verfügung stehen. Die Anschlußstellen können aber auch ohne Faltung der FBL 10 gebildet werden, indem die Leiter 11 derselben abisoliert werden. Die FBL 10 kann in den Anschlußstellen auch geteilt sein. Das bietet sich insbesondere dann an, wenn mehr als zwei Leiter 11 in der FBL 10 vorhanden sind.

Die FBL 120 kann zwischen den beiden Endstellen 6 und 8 gemäß Fig. 2 auch als Bifilarspule 12 gewickelt sein. In der Bifilarspule 12 ist die FBL 10 etwa in ihrer Mitte umgebogen, so daß sich eine Umkehrstelle 13 ergibt. Von dort aus ist die FBL 10 zweilagig gewickelt. Wenn an ihren beiden Enden in entgegengesetzter Richtung gezogen wird, verkleinert die durch das Wickeln entstandene Bifilarspule 12 ihren Durchmesser. Infolge der Elastizität der FBL 10 wickelt sie sich wieder auf, wenn die an ihren Enden angreifenden Zugkräfte fortfallen. Der Durchmesser der Bifilarspule 6 in der Ausgangsstellung der Vorrichtung wird zweckmäßig so gewählt, daß er gleich dem kürzesten Abstand der beiden Endstellen 6 und 8 voneinander oder kleiner als dieser Abstand ist.

In Fig. 3 ist die FBL 10 so dargestellt, daß nur ihre Enden mit hier abgebogenen Anschlußstellen zu sehen sind. Ihr gewundener Teil ist aus der Darstellung nicht zu erkennen. Auf der rechten Seite der Darstellung ist keine weiterführende Leitung angeschlossen, sondern es ragen nur die abisolierten Leiter 11 aus dem Ende der FBL 10 heraus. Die FBL 10 hat im dargestellten Ausführungsbeispiel fünf Leiter 11, bei denen es sich in bevorzugter Ausführungsform um Flachleiter handelt.

Auf der in der Darstellung linken Seite der FBL 10 ist eine weiterführende Leitung 14 angeschlossen, von der im dargestellten Ausführungsbeispiel ebenfalls fünf isolierte Leiter zu erkennen sind. Das um 90° gebogene Ende der FBL 10 sowie die Verbindungstelle 15 zwischen den Leitern 11 der FBL 10 und den Leitern 16 der weiterführenden Leitung 14 sowie das Ende der Leitung 14 sind von einem Schutzkörper 17 aus Isoliermaterial umgeben. Die Leiter 16 der Leitung 14 sind mit den Leitern 11 der FBL 10 elektrisch leitend verbunden. Sie können verlötet oder verquetscht sein.

Die Verbindungsstelle 15 ist wie folgt gegen Zug- und Biegebeanspruchungen geschützt, die auf die Leitung 14 einwirken:

Die Leiter 16 der Leitung 14 werden über eine größere Länge abisoliert als das für ihre Verbindung mit den Leitern 11 der FBL 10 erforderlich wäre. Sie werden in diesem verlängerten Bereich, in dem sie also blank vorliegen, in einem Klemmkörper 18 festgelegt, der aus Isoliermaterial besteht. Der Klemmkörper 18 ist vorzugsweise zweiteilig ausgeführt, wobei seine beiden Teile beispielsweise durch einrastende Elemente miteinander verbinden werden können.

Im Klemmkörper 18 sind die Leiter 16 so festgelegt, daß sie mindestens zweimal gebogen sind. Der Klemmkörper 18 hat in bevorzugter Ausführungsform Vorsprünge 19 mit rechtwinkligen Kanten, durch welche die Leiter 16 entsprechend der Darstellung in Fig. 4 jeweils viermal um 90° abgebogen werden, so daß ihre freien Enden wieder in der Achse der Leitung 14 liegen. Selbstverständlich können auch andere Winkel als 90° verwendet werden und es ist auch möglich, die Leiter 16 beispielsweise dreimal oder mehr als viermal abzubiegen. Es muß nur sichergestellt sein, daß die Leiter 16 nach ihrer Festlegung im Klemmkörper 18 nicht aus demselben herausgezogen werden können. Dazu ist am besten eine Biegung um mindestens zweimal 90° geeignet.

Der Klemmkörper 18 ist ein vorgefertigtes Teil, das aus einem beliebigen Kunststoff bestehen kann. Vorzugsweise handelt es sich um einen thermoplastischen Kunststoff. Die Leiter 16 können massiv sein und zu ihrer Festlegung im Klemmkörper 18 vorgeformt werden. Sie können jedoch auch als Litzenleiter ausgebildet sein und dann beim Zusammenfügen der beiden Teile des Klemmkörpers 18 abgebogen werden.

Nach Verbindung der Leiter 11 und 16 wird um das Ende der FBL 10, die Verbindungsstelle 15 und das Ende der Leitung 14 der Schutzkörper 17 herumgeformt. Auch für den aus Isoliermaterial bestehenden Schutzkörper 17 kann ein thermoplastischer Kunststoff verwendet werden. Er kann als vorgefertigtes Teil aus zwei oder mehr Teilen bestehen, die durch einrastende Elemente oder mittels Ultraschalls miteinander verbunden werden können. Es ist jedoch auch möglich, den Schutzkörper 17 in einem Spritzgießwerkzeug durch Spritzen herzustellen. In allen Fällen ist der Klemmkörper 18 so im Schutzkörper 17 eingebettet, daß er in axialer Richtung gesichert ist und nicht aus dem Schutzkörper 17 herausgezogen werden kann.

## Patentansprüche

1. Vorrichtung zur Stromübertragung zwischen zwei Endstellen, zwischen denen eine der elektrischen Verbindung dienende, in Windungen verlaufende Flachband-Leitung (10) mit mindestens zwei elektrischen Leitern angeordnet ist, deren Länge wesentlich größer als der Abstand der beiden Endstellen (6,8) voneinander ist, bei welcher mindestens eine der beiden Endstellen relativ zu der anderen bewegbar ist, bei welcher an die abisolierten Leiter der Flachband-Leitung jeweils Leiter einer weiterführenden Leitung (14) elektrisch leitend angeschlossen sind und bei welcher die Enden der Flachband-Leitung (10) und die Verbindungsstelle der Leiter der beiden Leitungen jeweils von einem Schutzkörper (17) aus Isoliermaterial umgeben sind, dadurch gekennzeichnet,
- daß die abisolierten blanken Leiter (16) der weiterführenden Leitung (14) jeweils in einem aus Isoliermaterial bestehenden Klemmkörper (18) festgelegt sind, der zwischen der Verbindungsstelle (15) der Leiter (11,16) beider Leitungen (10,14) und der verbleibenden Isolierung der weiterführenden Leitung (14) angeordnet ist und in dem die Leiter (16) mindestens zweimal gebogen festgelegt sind und
- daß der Klemmkörper (18) in den Schutzkörper (17) gegen axiale Bewegung gesichert eingebettet ist.

2. Vorrichtung nach Anspruch 1, dadurch gekennzeichnet, daß in dem Klemmkörper (18) Vorsprünge (19) angebracht sind, an denen die gebogenen Leiter (16) anliegen.

3. Vorrichtung nach Anspruch 1 oder 2, dadurch gekennzeichnet, daß die Vorsprünge (19) rechtwinklig ausgeführt sind.

4. Vorrichtung nach einem der Ansprüche 1 bis 3, dadurch gekennzeichnet, daß der Klemmkörper (18) aus zwei vorgefertigten, miteinander verbindbaren Teilen besteht.

5. Vorrichtung nach einem der Ansprüche 1 bis 4, dadurch gekennzeichnet, daß die Teile des Klemmkörpers (18) durch einrastende Elemente miteinander verbindbar sind.

6. Vorrichtung nach einem der Ansprüche 1 bis 5, dadurch gekennzeichnet, daß der Schutzkörper (17) aus vorgefertigten, fest miteinander verbindbaren Teilen besteht.

7. Vorrichtung nach einem der Ansprüche 1 bis 5, dadurch gekennzeichnet, daß der Schutzkörper (17) ein um die Anschlußstelle die Verbindungsstelle (15) der Leiter (11,16) und die Isolierung der weiterführenden Leitung (14) herumgespritzter Isolierkörper ist.

## Claims

1. Device for the transmission of current between two terminal points, between which a ribbon line (10) used for the electrical connection and extending in turns and having at least two electrical conductors, the length of which is significantly greater than the distance between the two terminal points (6, 8) from one another, is arranged, in which at least one of the two terminal points can be moved relative to the other one, in which conductors of an ongoing line (14) are electrically conductively connected in each case to the stripped conductors of the ribbon line and in which the ends of the ribbon line (10) and the junction of the conductors of the two lines are in each case surrounded by a protective body (17) of insulating material, characterized in that the stripped bare conductors (16) of the ongoing line (14) are in each case fixed in position in a clamping body (18) consisting of insulating material, which is arranged between the junction (15) of the conductors (11, 16) of both lines (10, 14) and the remaining insulation of the ongoing line (14) and in which the conductors (16) are fixed in position bent at least twice, and in that the clamping body (18) is embedded in the protective body (17) protected against axial movement.

2. Device according to Claim 1, characterized in that projections (19) against which the bent conductors (16) rest are provided in the clamping body (18).

3. Device according to Claim 1 or 2, characterized in that the projections (19) are constructed to be right-angled.

4. Device according to one of Claims 1 to 3, characterized in that the clamping body (18) consists of two prefabricated parts which can be connected to one another.

5. Device according to one of Claims 1 to 4, characterized in that the parts of the clamping body (18) can be connected to one another by means of locking-in elements.

6. Device according to one of Claims 1 to 5, characterized in that the protective body (17) consists of prefabricated parts which can be firmly connected to one another.

7. Device according to one of Claims 1 to 5, characterized in that the protective body (17) is an insulating body injection-moulded around the connecting point, the junction (15) of the conductors (11, 16) and insulation of the ongoing line (14).

## Revendications

1. Dispositif pour le transport de courant entre deux stations terminales entre lesquelles est disposée une conduite plate (10) disposée en enroulements servant de liaison électrique avec au moins deux conducteurs électriques dont la longueur est nettement plus grande que la distance entre les deux stations terminales (6,8), dans lequel au moins une des stations terminales mobile par rapport à l'autre, dans lequel sur chacun des conducteurs dénudés de la ligne plate (10) est reliée une conduite de continuation (14) conduisant l'électricité et dans lequel les extrémités de la conduite plate (10) et les points de liaison des conducteurs des deux conduites sont entourés chacun d'un corps de protection (17) d'isolant, caractérisé en ce que,
- les conducteurs dénudés (16) de la conduite de continuation (14) sont fixés chacun dans une partie de blocage (18) en isolant, qui est disposée entre les points de liaison (15) des conducteurs (11,16) des deux conduites (10,14) et l'isolation restante de la conduite de continuation (14) et dans laquelle les conducteurs (16) sont fixés au moins avec deux courbures et en ce que la partie de blocage (18) est noyée dans le corps de protection (17) en étant protégé contre le mouvement axial.

2. Dispositif selon la revendication 1, caractérisé en ce que des saillies (19) sont prévues dans le corps de blocage (18) ,contre lesquelles sont disposés les conducteurs recourbés (16).

3. Dispositif selon l'une des revendications 1 ou 2, caractérisé en ce que les saillies (19) sont à angles droits.

4. Dispositif selon l'une des revendications 1 à 3, caractérisé en ce que le corps de serrage (18) est constitué de deux parties préfabriquées pouvant être remises ensemble.

5. Dispositif selon l'une des revendications 1 à 4, caractérisé en ce que les parties du corps de serrage (18) sont connectables par des éléments à encliqueter ensemble.

6. Dispositif selon l'une des revendications 1 à 5, caractérisé en ce que le corps de protection (17) est constitué de parties préfabriquées et pourront être fixées ensemble.

7. Dispositif selon l'une des revendications 1 à 5, caractérisé en ce que le corps de protection (17) est un corps isolant moulé autour du point de connection du poste de liaison (15) des conducteurs (11,16) et de l'isolation de la conduite de continuation (14).
